# EUROPEAN PATENT APPLICATION

(11) **EP 2 061 262 A1**
(43) Date of publication of application: **20.05.2009**
(21) Application number: 08169396.2
(22) Date of filing: 19.11.2008
(51) Int. Cl.: H04Q 3/64

(54) **Call connection method, system and device**

(30) Priority: 19.11.2007 CN 200710187853
(71) Applicant: Huawei Technologies Co., Ltd., Longgang District, Shenzhen Guangdong 518129 (CN)
(72) Inventor: Zhang, Yongwei, Guangdong 518129 (CN)
(74) Representative: Thun, Clemens

(57) **Abstract**

The present invention discloses a call connection method. The method includes: controlling a switching device to establish a telephone channel with an ACD according to a received triggering service request; controlling the ACD to obtain a destination subscriber number through the telephone channel; and controlling the ACD to disconnect the telephone channel and controlling the switching device to connect the destination subscriber number. The present invention further discloses a call connection system, a service control device, a switching device, and an ACD. Therefore, the problem of the circuitous telephone channel of the ACD, also known as trombone or hairpin, in a subscriber call of a voice value-added service is solved.

## Description

### CROSS-REFERENCE TO RELATED APPLICATIONS

This application claims priority to Chinese Patent Application No. 200710187853.0, filed on November 19, 2007, entitled "Call Connection Method, System and Device", commonly assigned, incorporated by reference herein for all purposes.

### FIELD OF THE INVENTION

The present invention relates to the communication field, and more particularly to a call connection method, system and device in a subscriber call of a voice value-added service.

### BACKGROUND

A Computer & Telephony Integration (CTI) platform provides multiple services, one of which is a voice Value-Added Service (VAS). The CTI platform realizes an explanation and execution of the voice VAS logic and performs a unified management on the voice VAS. An Automatic Call Distributor (ACD) within the CTI platform is a voice access management module of the voice VAS. The ACD mainly deals with a voice call access request of a subscriber in a voice call flow and a voice management flow, completes the management of a voice call connection, a signaling processing, a call control and a call routing, and completes a voice interaction with the subscriber according to instructions of the service logic. In the process of a subscriber call of the voice VAS, the CTI platform performs the voice interaction with a calling party through the ACD and a Service Switching Point (SSP) to obtain a destination subscriber number that the calling party desires to connect, and then, the calling party performs a conversation with the destination subscriber through the ACD and the SSP.

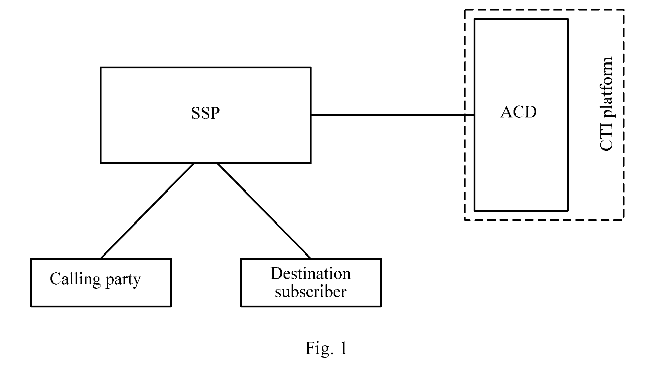

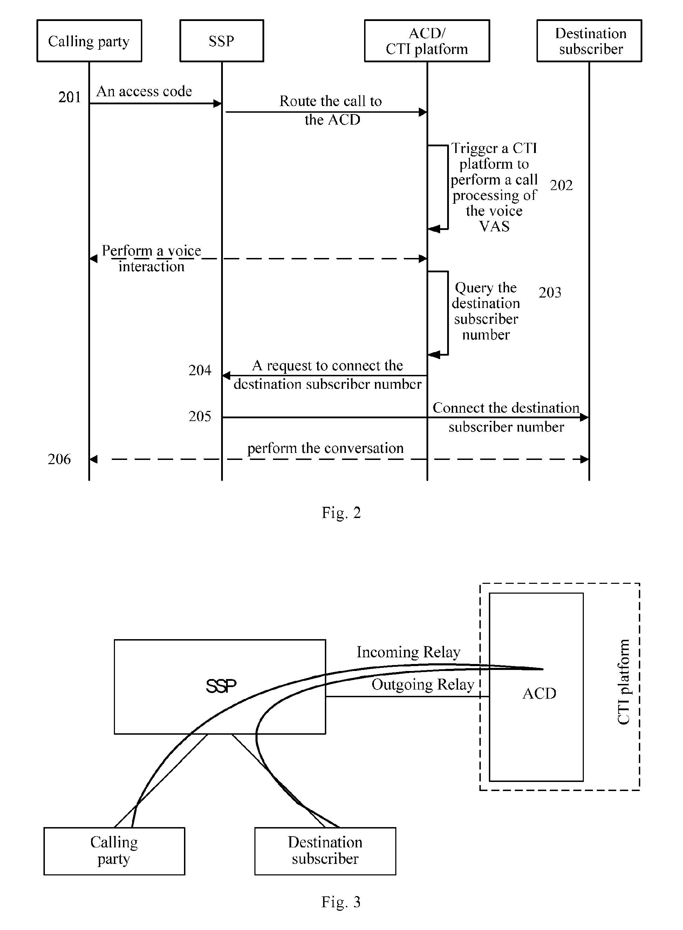

FIG. 1 is a schematic structural view of a networking of the subscriber call of the voice VAS in the prior art. The networking includes an SSP and an ACD. The subscriber call of the voice VAS in the prior art is illustrated below using a flow shown in FIG. 2 in combination with FIG. 1. The flow includes the following steps:

In Step 201, a calling subscriber makes a call by dialing an access code of the voice VAS, and the call is routed to the ACD, so as to establish a telephone channel between the SSP and the ACD.

The call in this step is a call with the calling subscriber as a calling party and the access code as a called party.

Here, the illustration is made by taking an example that the access code is 114. That is, the voice VAS at this time is the 114 service. The concrete way of this step may be that the calling party transmits the access code to the SSP by dialing keys in the subscriber's terminal. The 114 service may provide the service of querying a destination subscriber number for the calling party, and the calling party may perform a conversation with the destination subscriber through the ACD and the SSP after obtaining the destination subscriber number.

In Step 202, the ACD triggers a CTI platform to perform a call processing of the voice VAS according to the access code.

In Step 203, the CTI platform performs a voice interaction with the calling party through the ACD and the SSP, so as to obtain the destination subscriber number.

Relay within the ACD is an interface thereof. The CTI platform performs the voice interaction with the calling party through the ACD and the SSP, that is to say, the CTI platform performs the voice interaction with the calling party through the relay within the ACD and the SSP. Here, the relay, which is occupied when the CTI platform interacts with the calling party, is called an incoming relay.

In Step 204, the CTI platform sends a request to connect the destination subscriber number to the SSP through the ACD, wherein the request contains the destination subscriber number obtained.

In Step 205, the SSP connects the destination subscriber number to the destination subscriber.

In Step 206, the calling party performs conversation with the destination subscriber through the relay within the ACD of the CTI platform and the SSP.

FIG. 3 is a representation of the conversation between the calling party and the destination subscriber in this step in the call networking shown in FIG. 1. As can be seen in FIG. 3, the telephone channel between the ACD and the SSP is circuitous, that is to say, the telephone channel includes not only the telephone channel from the ACD to the SSP but also a telephone channel from the SSP to the ACD. Moreover, during the conversation, the telephone channel between the ACD and the SSP established in the Step 201 and two relays within the ACD are occupied at all times. The relay occupied by the calling party is the incoming relay, and the relay occupied by the destination subscriber is the outgoing relay.

In the existing subscriber call scheme of the voice VAS, during the conversation between the calling party and the destination party, the telephone channel between the ACD and the SSP is circuitous, and the incoming relay and the outgoing relay within the ACD as well as the telephone channel between the ACD and the SSP are occupied and cannot be released at all times, which reduces the utilization of the relay.

### SUMMARY

An embodiment of the present invention provides a call connection method capable of solving the problem of the circuitous telephone channel of an ACD in a subscriber call of a voice VAS.

An embodiment of the present invention provides a call connection system capable of solving the problem of the circuitous telephone channel of an ACD in a subscriber call of the voice VAS.

An embodiment of the present invention provides a switching point of a call connection, and the switching point is capable of solving the problem of the circuitous telephone channel of an ACD in a subscriber call of the voice VAS.

An embodiment of the present invention provides a Service Control Point (SCP) of a call connection, and the SCP is capable of solving the problem of the circuitous telephone channel of an ACD in a subscriber call of the voice VAS.

An embodiment of the present invention provides an ACD of a call connection, and the ACD is capable of solving the problem of the circuitous telephone channel of the ACD in a subscriber call of the voice VAS.

The present invention provides a call connection method, and the method includes:
controlling a switching device to establish a telephone channel with an ACD according to a received triggering service request;
controlling the ACD to obtain a destination subscriber number through the telephone channel; and
controlling the ACD or the switching device to disconnect the telephone channel, and
controlling the switching device to connect the destination subscriber number.

The present invention provides a call connection system. The system includes a switching device, a service control device, and an ACD.

The switching device is adapted to send a triggering service request to the service control device, receive a call routing request sent by the service control device, and establish a telephone channel between the switching device and the ACD; and to receive a connection request sent by the service control device and connect a destination subscriber number.

The service control device is adapted to receive the triggering service request sent by the switching device and send the call routing request to the switching device; send a request to query the destination subscriber number to the ACD, receive the destination subscriber number sent by the ACD, send a request to connect the destination subscriber number to the switching device, and send a disconnection request to the ACD.

The ACD is adapted to receive the request to query the destination subscriber number sent by the service control device, query the destination subscriber number through the established telephone channel with the switching device, and return the destination subscriber number obtained to the service control device; and disconnect the telephone channel after receiving the disconnection request sent by the service control device.

The present invention provides a call connection system. The system includes a switching device, a service control device, and an ACD.

The switching device is adapted to send a triggering service request to the service control device, receive a call routing request sent by the service control device, and establish a telephone channel between the switching device and the ACD; receive a disconnection request sent by the service control device and send a release message to the ACD; and receive a connection request sent by the service control device and connect a destination subscriber number.

The service control device is adapted to receive the triggering service request sent by the switching device and send the call routing request to the switching device; send a request to query the destination subscriber number to the ACD, receive the destination subscriber number sent by the ACD, send a request to connect the destination subscriber number to the switching device, and send the disconnection request to the switching device.

The ACD is adapted to receive the request to query the destination subscriber number sent by the service control device, query the destination subscriber number through the established telephone channel with the switching device, and return the destination subscriber number obtained to the service control device; and disconnect the telephone channel after receiving the disconnection request sent by the switching device.

The present invention provides a switching device for call connection. The switching point includes a triggering service request sending module, a telephone channel establishment module, a telephone channel disconnection module, and a connection module.

The triggering service request sending module is adapted to receive an access code dialed by a calling party and send to a service control device a triggering service request carrying a calling party number and the access code.

The telephone channel establishment module is adapted to receive a call routing request sent by the service control device, establish a telephone channel between the switching device and an ACD; and return a response that the telephone channel is successfully established to the service control device.

The telephone channel disconnection module is adapted to receive a disconnection request sent by a control module and send the request to the ACD; and receive a reply message returned after the ACD disconnects relay with the switching device.

The connection module is adapted to receive a request to connect a destination subscriber number sent by the service control device, and connect the destination subscriber number, wherein the request carries the destination subscriber number.

The present invention provides a service control device for call connection. The service control device includes a triggering service request receiving module, a call routing control module, a query control module, a connection control module, and a disconnection control module.

The triggering service request receiving module is adapted to send an activation instruction to the call routing control module according to a triggering service request carrying a calling party number and an access code sent by a switching device.

The call routing control module is adapted to receive the activation instruction sent by the triggering service request receiving module, send a call routing request to the switching device, receive a response that a telephone channel is successfully established returned by the switching device, and send an activation instruction to the query control module.

The query control module is adapted to receive the activation instruction sent by the call routing control module, send a request to query a destination subscriber number to an ACD, wherein the request carries the calling party number and the access code, receive the destination subscriber number sent by the ACD, send the destination subscriber number to the connection control module, and send an activation instruction to the disconnection module.

The connection control module is adapted to send a request to connect the destination subscriber number to the switching device after receiving the destination subscriber number sent by the query control module, wherein the request contains the destination subscriber number obtained.

The disconnection control module is adapted to send a disconnection request to the ACD or the switching device after receiving the activation instruction sent by the query control module.

The present invention provides an ACD for call connection. The ACD includes a query module and a disconnection module.

The query module is adapted to receive a request to query a destination subscriber number sent by a service control device, wherein the request carries an access code and a calling party number; guide a CTI platform to activate a voice interactive script corresponding to the access code; perform a voice interaction with the calling party on a telephone channel established with a switching device through a relay within the ACD so as to query the destination subscriber number; and return the destination subscriber number obtained to the service control device.

The disconnection module is adapted to receive a disconnection request sent by the service control device or the switching device, and disconnect the telephone channel.

As can be seen from the above schemes, the subscriber call is realized through controlling the switching point and the ACD in the embodiments of the present invention. After the destination subscriber number is obtained, the ACD is controlled to disconnect the telephone channel occupied during the query of the destination subscriber number, and the switching point is controlled to connect directly the destination subscriber, so that the calling party and the destination subscriber perform the conversation only through the switching point instead of the telephone channel between the ACD and the switching point. Therefore, the problem of the circuitous telephone channel of the ACD in the voice VAS is solved, and the telephone channel resources between the ACD and the switching point are saved.

### BRIEF DESCRIPTION OF THE DRAWINGS

FIG. 1 is a schematic structural view illustrating a networking of a subscriber call of the voice VAS in the prior art;

FIG. 2 is a flow chart of the subscriber call of the voice VAS in the prior art;

FIG. 3 is a schematic view illustrating a conversation between a calling party and a destination subscriber in the networking of the subscriber call of the voice VAS in the prior art;

FIG. 4 is an example flow chart of a call connection method according to an embodiment of the present invention;

FIG. 5A is a flow chart illustrating a call connection method according to an embodiment of the present invention;

FIG. 5B is an another flow chart illustrating a call connection method according to an embodiment of the present invention;

FIG. 6 is a schematic structural view illustrating a networking of a subscriber call of the voice VAS according to an embodiment of the present invention;

FIG. 7 is a schematic view illustrating a conversation between a calling party and a destination subscriber in a networking of a subscriber call of the voice VAS according to an embodiment of the present invention; and

FIG. 8 is a schematic structural view illustrating a call connection system according to an embodiment of the present invention.

### DETAILED DESCRIPTION

In order to make the objectives, technical schemes, and advantages of the present invention comprehensible, embodiments accompanied with drawings are described in detail below.

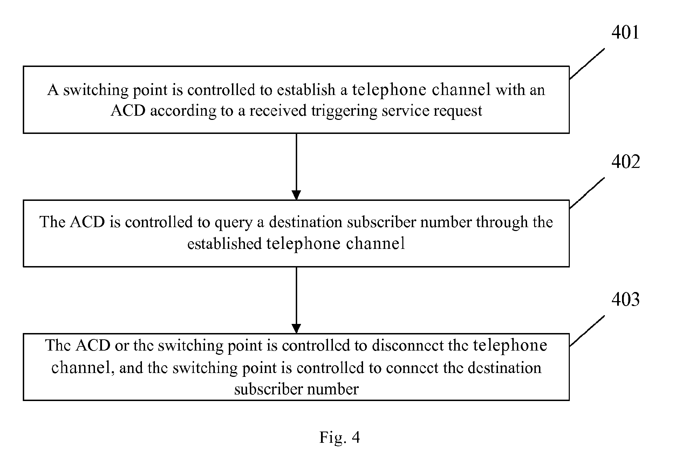

In the embodiments of the present invention, the problem of the circuitous telephone channel of an ACD is solved by controlling a switching point and the ACD to perform a subscriber call of a voice Value-Added Service (VAS). The switching point may be a Service Switching Point (SSP) for the narrowband domain in a fixed network, and may be a Mobile Switching Centre (MSC) for the narrowband domain in a mobile network. For other networks, the switching point is other devices correspondingly. A call connection method according to an embodiment of the present invention is specifically illustrated below in combination with FIG. 4.

FIG. 4 is an example flow chart of the call connection method according to an embodiment of the present invention. The method includes the following steps.

In Step 401, a switching point is controlled to establish a telephone channel with an ACD according to a received triggering service request.

This step may concretely include receiving the triggering service request carrying a calling party number and an access code, and controlling the switching point to route a call using the calling party number as a calling party and the access code as a called party to the ACD so as to establish the telephone channel between the switching point and the ACD.

In Step 402, the ACD is controlled to obtain a destination subscriber number through the established telephone channel.

This step may concretely include controlling the ACD to perform a voice interaction with the calling party to obtain the destination subscriber number on the established telephone channel.

In Step 403, the ACD or the switching point is controlled to disconnect the telephone channel, and the switching point is controlled to connect the destination subscriber number.

This step may concretely include informing the ACD or the switching point to disconnect the telephone channel, delivering the destination subscriber number to the switching point, and controlling the switching point to connect the destination subscriber number.

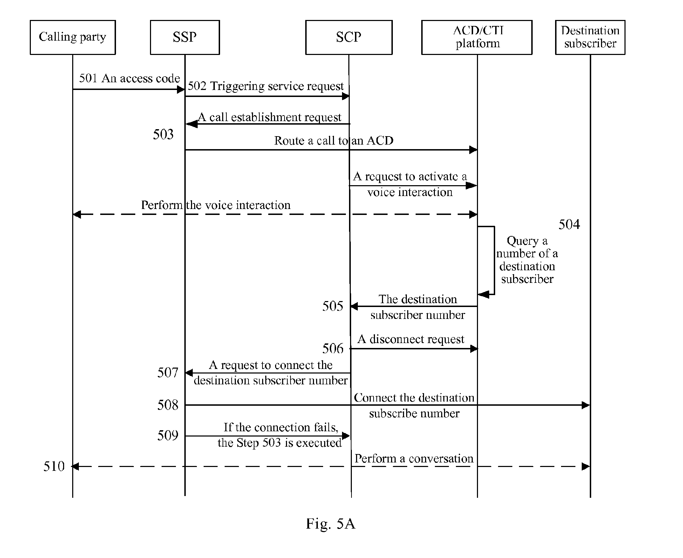

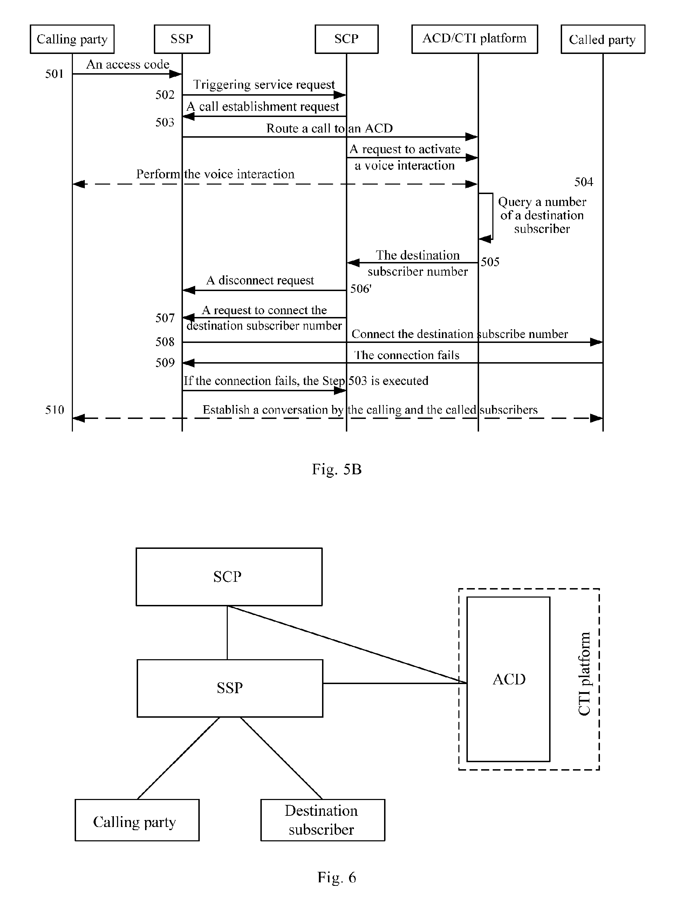

Taking the switching point being the SSP as an example, the call connection method according to an embodiment of the present invention is illustrated below with an example in FIG. 5A and FIG. 5B. FIG. 5A is a flow chart illustrating the call connection method according to an embodiment of the present invention. The method includes the following steps.

In Step 501, a calling party makes a call by dialing an access code of a voice VAS to an SSP.

This step may be implemented concretely in the way that the calling party sends the access code to the SSP by dialing keys in the subscriber's terminal.

In Step 502, the SSP sends a triggering service request carrying a calling party number and the access code to an SCP.

In Step 503, the SCP controls the SSP to route a call to an ACD so as to establish a telephone channel between the SSP and the ACD.

The call is a call using the calling party number as a calling party and the access code as a called party.

This step may concretely include that the SCP sends a call establishment request to the SSP to request the SSP to establish the telephone channel with the ACD, wherein the telephone channel uses the calling party number as the calling party and the access code as the called party; and the SSP routes the call using the calling party number as the calling party and the access code as the called party to the ACD so as to establish the telephone channel between the SSP and the ACD. The call establishment request may be an Establish Temporary Connection (ETC) message in an Intelligent Network Application Protocol (INAP). A specific process using the ETC message includes: the SCP sends the ETC message to the SSP to request the SSP to establish the telephone channel with the ACD, wherein the telephone channel uses the calling party number as the calling party and the access code as the called party; after receiving the ETC message, the SSP sends an Initial Address Message (IAM) to the ACD and routes the call to the ACD; and after receiving the IAM message, the ACD, on one hand, sends an Assist Request Instructions (ARI) message to the SCP, and, on the other hand, sends an Address Complete Message (ACM) to the SSP.

In Step 504, the SCP receives the ARI message returned by the ACD, and the SCP controls the ACD to perform a voice interaction with the calling party on the telephone channel established in the Step 503 so as to obtain a destination subscriber number.

This step may concretely include the following steps:

In a first step, the SCP sends a request to activate the voice interaction to the ACD, and the request carries the access code and the calling party number.

Here, the request to activate the voice interaction may be a User Interactive Script (UIScript) message carrying the access code and the calling party number.

In a second step, the ACD guides a CTI platform to activate a voice interactive script corresponding to the access code.

The voice interactive script within the CTI platform has a corresponding relation with the access code, and the voice interactive script is a part of the voice VAS.

In a third step, the ACD performs the voice interaction with the calling party on the telephone channel established in the Step 503 through a relay within the ACD so as to obtain the destination subscriber number that the calling party desires to connect.

Here, the illustration is made by taking an example that the access code is 114. Correspondingly, the voice VAS provided by the CTI platform is the 114 service, and the destination subscriber number obtained through the voice interaction is the number that the calling party desires to connect. For example, if the destination subscriber number that the calling party desires to connect is the number of a certain school's admission office, during the voice interaction, the ACD requests the calling party to inform through the relay within the ACD that the destination subscriber is "the certain school's admission office", and then the 114 service of the CTI platform may obtain the number of "the certain school's admission office", that is, the destination subscriber number.

In Step 505, the ACD returns the destination subscriber number to the SCP.

This step may concretely include that the ACD returns to the SCP the UIScript message containing the destination subscriber number obtained.

In Step 506, the SCP sends a disconnection request to the ACD to inform the ACD to disconnect the telephone channel with the SSP.

The telephone channel is a telephone channel occupied during the voice interaction.

This step may concretely include that the SCP informs the ACD to disconnect the relay with the SSP upon sending the disconnection request to the ACD, in which the relay is the relay within the ACD occupied during the voice interaction.

Alternatively, as shown in FIG. 5B, this step may be Step 506' in which the SCP sends the disconnection request to the SSP. This step 506' may further include: the SCP delivers a Disconnect Forward Connection (DFC) message to request to disconnect the telephone channel between the SSP and the ACD; the SSP sends a RELease message (REL) to the ACD after receiving the DFC message sent by the SCP; and after receiving the REL message, the ACD disconnects the telephone channel with the SSP and replies to the SSP with a ReLease Complete message (RLC).

In Step 507, after receiving the destination subscriber number, the SCP sends a request to connect the destination subscriber number to the SSP, and the request contains the destination subscriber number.

In Step 508, the SSP connects the destination subscriber number; Step 509 is executed if the connection fails, and Step 510 is executed if the connection is successful.

In this step, a condition of the connection failure includes that the destination subscriber is "busy" or "no reply".

In Step 509, the SSP returns a connection failure message to the SCP, and the Step 503 is executed.

In Step 510, the calling party and the destination subscriber perform a conversation through the SSP.

In the call flow, the SSP respectively monitors every subscriber call. The calling party and the destination subscriber corresponding to a certain subscriber call may perform the conversation after the success of the connection in the Step 508.

In this embodiment, the messages interacting between the SCP and the SSP as well as those interacting between the SCP and the ACD may be implemented through corresponding messages of the INAP protocol.

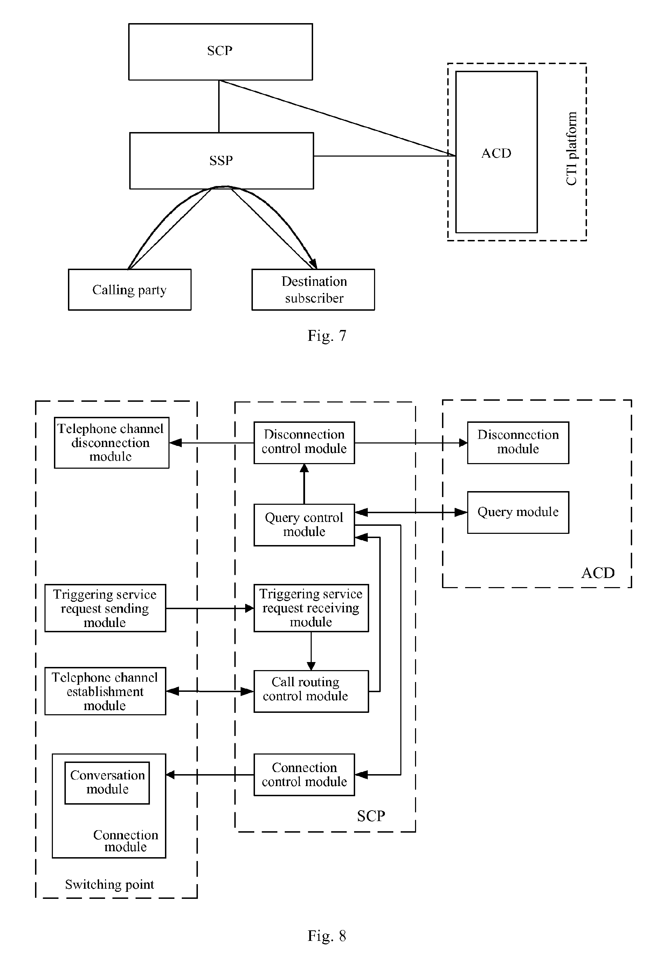

In the flows of FIG. 5A and FIG. 5B, after the destination subscriber number is obtained, the SCP controls the ACD or the SSP to disconnect the relay and the telephone channel occupied during the voice interaction, and controls the SSP to connect the destination subscriber. FIG. 6 is a schematic structural view illustrating a networking of a subscriber call of the voice VAS corresponding to the flows of FIG. 5A and FIG. 5B. FIG. 7 is a representation of the conversation between the calling party and the destination subscriber in the Step 510 in the networking structure of FIG. 6. As can be seen from FIG. 7, the calling party and the destination subscriber perform the conversation only through the SSP instead of the relay within the ACD and the telephone channel between the ACD and the SSP. Therefore, the problem of the circuitous telephone channel of the ACD in the voice VAS is solved, the occupied telephone channel resources between the ACD and the SSP are saved, and the occupancy of the relay within the ACD is reduced.

FIG. 8 is a schematic structural view illustrating a call connection system according to an embodiment of the present invention. The system includes a switching point, an SCP, and an ACD.

The switching point is adapted to send a triggering service request to the SCP, receive a call routing request sent by the SCP, and establish a telephone channel between the switching point and the ACD; and to receive a connection request sent by the SCP and connect a destination subscriber number.

The SCP is adapted to receive the triggering service request sent by the switching point and send the call routing request to the switching point; and send a request to query the destination subscriber number to the ACD, receive the destination subscriber number sent by the ACD, send a request to connect the destination subscriber number to the switching point, and send a disconnection request to the ACD.

The ACD is adapted to receive the request to query the destination subscriber number sent by the SCP, query the destination subscriber number through the established telephone channel with the switching point, and return the destination subscriber number obtained to the SCP; and disconnect the telephone channel after receiving the disconnection request sent by the SCP.

Alternatively, in addition to the above functions, the switching point is further adapted to receive the disconnection request sent by the SCP and send an REL message to the ACD. Then at this time, in addition to the above functions, the SCP is further adapted to send the disconnection request to the switching point instead of the ACD; while the ACD receives the disconnection request sent by the switching point instead of the SCP.

Optionally, the switching point is an SSP or an MSC.

Optionally, the switching point includes a triggering service request sending module, a telephone channel establishment module, a telephone channel disconnection module, and a connection module. The SCP includes a triggering service request receiving module, a call routing control module, a query control module, a connection control module, and a disconnection control module. The ACD includes a query module and a disconnection module.

The triggering service request sending module is adapted to receive an access code dialed by a calling party, and send the triggering service request carrying a calling party number and the access code to the triggering service request receiving module.

The telephone channel establishment module is adapted to receive the call routing request sent by the call routing control module, establish the telephone channel between the switching point and the ACD, and return a response that the telephone channel is successfully established to the call routing control module.

The telephone channel disconnection module is adapted to receive the disconnection request sent by the disconnection control module, send the request to the ACD, and receive a reply message returned after the ACD disconnects the telephone channel with the switching point.

The connection module is adapted to receive the request to connect the destination subscriber number sent by the connection control module, and connect the destination subscriber number, wherein the request carries the destination subscriber number.

Optionally, the connection module includes a conversation module adapted to realize a conversation between the calling party and the destination subscriber.

The triggering service request receiving module is adapted to send an activation instruction to the call routing control module according to the triggering service request carrying the calling party number and the access code sent by the triggering service request sending module.

The call routing control module is adapted to receive the activation instruction sent by the triggering service request receiving module, send the call routing request to the telephone channel establishment module, receive the response that the telephone channel is successfully established returned by the telephone channel establishment module, and send an activation instruction to the query control module.

The query control module is adapted to receive the activation instruction sent by the call routing control module, send to the query module the request to query the destination subscriber number carrying the calling party number and the access code, receive the destination subscriber number sent by the query module, send the destination subscriber number to the connection control module, and send an activation instruction to the disconnection control module.

The connection control module is adapted to send the request to connect the destination subscriber number to the connection module, after receiving the destination subscriber number sent by the query control module, wherein the request contains the destination subscriber number obtained.

The disconnection control module is adapted to send the disconnection request to the disconnection module or the telephone channel disconnection module after receiving the activation instruction sent by the query control module.

The query module is adapted to receive the request to query the destination subscriber number carrying the access code and the calling party number sent by the query control module, guide the CTI platform to activate a voice interactive script corresponding to the access code, perform a voice interaction with the calling party on the telephone channel established with the switching device through the relay within the ACD so as to query the destination subscriber number, and return the destination subscriber number obtained to the query control module.

The disconnection module is adapted to receive the disconnection request sent by the disconnection control module, and disconnect the telephone channel and the relay.

In the embodiments of the present invention, the switching point and the ACD are controlled to perform the subscriber call of the voice VAS through the SCP. After the destination subscriber number is obtained, the SCP controls the ACD to disconnect the relay and the telephone channel occupied during the voice interaction. Moreover, the calling party and the destination subscriber have the conversation only through the switching point instead of the relay within the ACD and the telephone channel between the ACD and the switching point. In this way, the problem of the circuitous telephone channel of the ACD in the voice VAS is solved, the occupied telephone channel resources between the ACD and the switching point are saved, and the utilization of the relay within the ACD is enhanced.

It is apparent to those of ordinary skill in the art that, all or part of steps in various methods of the above embodiment may be achieved through related hardware instructed by a program. The program may be stored in a computer readable storage medium including an ROM, an RAM, and a magnetic disk or an optical disk, etc.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the spirit and scope of the present invention, and those modifications, changes and equivalent replacements are all intended to be covered by the present invention provided that they fall in the scope specified in the appending claims of the present invention.

## Claims

1. A call connection method, comprising:
controlling a switching device to establish a telephone channel with an Automatic Call Distributor (ADC) according to a received triggering service request;
controlling the ACD to obtain a destination subscriber number through the telephone channel; and
controlling the ACD or the switching device to disconnect the telephone channel, and controlling the switching device to connect the destination subscriber number.

2. The method according to claim 1, wherein the controlling a switching device to establish the telephone channel with the ACD according to the received triggering service request comprises:
receiving the triggering service request sent by the switching device, wherein the triggering service request carries a calling party number and an access code; and
controlling the switching device to route a call using the calling party number as a calling party and the access code as a called party to the ACD so as to establish the telephone channel between the switching device and the ACD.

3. The method according to claim 1, wherein the controlling the ACD to obtain the destination subscriber number through the telephone channel comprises: controlling the ACD to perform a voice interaction with the calling party on the established telephone channel so as to obtain the destination subscriber number.

4. The method according to claim 3, wherein the controlling the ACD to obtain the destination subscriber number through the telephone channel comprises:
sending a request to activate the voice interaction to the ACD, wherein the request carries the access code and the calling party number;
guiding, by the ACD, a Computer & Telephony Integration (CTI) platform to activate a voice interactive script corresponding to the access code; and
performing, by the CTI platform, the voice interaction with the calling party on the established telephone channel through a relay within the ACD so as to obtain the destination subscriber number.

5. The method according to claim 4, wherein after obtaining the destination subscriber number, the method comprises informing the ACD to disconnect the relay.

6. The method according to claim 1, wherein the controlling the switching device to disconnect the telephone channel comprises:
delivering to the switching device a Disconnect Forward Connection (DFC) message that requests to disconnect the telephone channel between the switching device and the ACD;
sending, by the switching device, a RELease message (REL) to the ACD after the switching device receives the DFC message; and
disconnecting, by the ACD, the telephone channel with the switching device after the ACD receives the REL, and replying a ReLease Complete message (RLC) to the switching device.

7. The method according to any one of claims 1-6, wherein after controlling the switching device to connect the destination subscriber number, the method comprises:
performing, by the calling party and the destination subscriber, a conversation through the switching device.

8. The method according to any one of claims 1-6, wherein after controlling the switching device to connect the destination subscriber number, the method comprises:
receiving, from the switching device, a connection failure message if the destination subscriber number is "busy" or "no reply".

9. The method according to claim 8, wherein after receiving the connection failure message, the method comprises:
controlling the switching device to route the call using the calling party number as the calling party and the access code as the called party to the ACD to establish the telephone channel between the switching device and the ACD.

10. A call connection system, comprising a switching device, a service control device and an Automatic Call Distributor (ADC); wherein the switching device is adapted to send a triggering service request to the service control device, receive a call routing request sent by the service control device, and establish a telephone channel between the switching device and the ACD; and receive a connection request sent by the service control device and connect a destination subscriber number; the service control device is adapted to receive the triggering service request sent by the switching device and send the call routing request to the switching device; send a request to query the destination subscriber number to the ACD, receive the destination subscriber number sent by the ACD, send a request to connect the destination subscriber number to the switching device, and send a disconnection request to the ACD; and the ACD is adapted to receive the request to query the destination subscriber number sent by the service control device, query the destination subscriber number through the established telephone channel with the switching device, and return the destination subscriber number obtained to the service control device; and disconnect the telephone channel after receiving the disconnection request sent by the service control device.

11. A call connection system, comprising a switching device, a service control device and an Automatic Call Distributor (ADC); wherein the switching device is adapted to send a triggering service request to the service control device, receive a call routing request sent by the service control device, and establish a telephone channel between the switching device and the ACD, receive a disconnection request sent by the service control device and send a release message to the ACD, and receive a connection request sent by the service control device and connect a destination subscriber number; the service control device is adapted to receive the triggering service request sent by the switching device and send the call routing request to the switching device, send a request to query the destination subscriber number to the ACD, receive the destination subscriber number sent by the ACD, send a request to connect the destination subscriber number to the switching device, and send the disconnection request to the switching device; and the ACD is adapted to receive the request to query the destination subscriber number sent by the service control device, query the destination subscriber number through the established telephone channel with the switching device, and return the destination subscriber number obtained to the service control device, and disconnect the telephone channel after receiving the disconnection request sent by the switching device.

12. A switching device, comprising a triggering service request sending module, a telephone channel establishment module, a telephone channel disconnection module and a connection module; wherein the triggering service request sending module is adapted to receive an access code dialed by a calling party and send a triggering service request carrying a calling party number and the access code to a service control device; the telephone channel establishment module is adapted to receive a call routing request sent by the service control device, establish a telephone channel between the switching device and an Automatic Call Distributor (ADC); and return a response that the telephone channel is successfully established to the service control device; the telephone channel disconnection module is adapted to receive a disconnection request sent by the service control device and send the request to the ACD, and receive a reply message returned after the ACD disconnects the telephone channel with the switching device; and the connection module is adapted to receive a request to connect a destination subscriber number sent by the service control device, and connect the destination subscriber number, wherein the request carries the destination subscriber number.

13. The switching device according to claim 12, wherein the connection module comprises a conversation module adapted to realize a conversation between the calling party and the destination subscriber.

14. A service control device, comprising a triggering service request receiving module, a call routing control module, a query control module, a connection control module and a disconnection control module; wherein the triggering service request receiving module is adapted to send an activation instruction to the call routing control module according to a triggering service request carrying a calling party number and an access code sent by a switching device; the call routing control module is adapted to receive the activation instruction sent by the triggering service request receiving module, send a call routing request to the switching device, receive a response that a telephone channel is successfully established returned by the switching device, and send an activation instruction to the query control module; the query control module is adapted to receive the activation instruction sent by the call routing control module, send to an Automatic Call Distributor (ADC) a request to query a destination subscriber number, wherein the request carries the calling party number and the access code, receive the destination subscriber number sent by the ACD, send the destination subscriber number to the connection control module, and send an activation instruction to the disconnection control module; the connection control module is adapted to send a request to connect the destination subscriber number to the switching device after receiving the destination subscriber number sent by the query control module, wherein the request contains the destination subscriber number obtained; and the disconnection control module is adapted to send a disconnection request to the ACD or the switching device after receiving the activation instruction sent by the query control module.

15. An Automatic Call Distributor (ADC), comprising a query module and a disconnection module; wherein the query module is adapted to receive a request to query a destination subscriber number sent by a service control device, wherein the request carries an access code and a calling party number, guide a computer & telephony integration platform to activate a voice interactive script corresponding to the access code, perform a voice interaction with the calling party on a telephone channel established with a switching device through a relay within the ACD so as to query the destination subscriber number, and return the destination subscriber number obtained to the service control device; and the disconnection module is adapted to receive a disconnection request sent by the service control device or the switching device, and disconnect the telephone channel.
